Europäisches Patentamt

(19) European Patent Office

Office européen des brevets

(11) Publication number: **0 235 098 B1**

# EUROPEAN PATENT SPECIFICATION

(12)

(45) Date of publication of patent specification :
**11.09.91 Bulletin 91/37**

(51) Int. Cl.$^5$ : **C01F 7/04**

(21) Application number : **87830065.6**

(22) Date of filing : **25.02.87**

(54) A process for preparing a lithium aluminate powder in gamma phase.

(30) Priority : **26.02.86 IT 4769386**

(43) Date of publication of application :
**02.09.87 Bulletin 87/36**

(45) Publication of the grant of the patent :
**11.09.91 Bulletin 91/37**

(84) Designated Contracting States :
**BE DE FR GB NL**

(56) References cited :
FR-A- 2 563 512
CHEMICAL ABSTRACTS, vol. 103, 1985, page
257, no. 10305n, Columbus, Ohio, US; O.
SBAIZERO: "Thermal evolution of
sodium(lithium) polyaluminate microspheres
produced via a sol-gel method" &
THERMOCHIM. ACTA 1985, 85, 227-30

(73) Proprietor : **ENEA COMITATO NAZIONALE
PER LA RICERCA E PER LO SVILUPPO DEL
L'ENERGIA NUCLEARE E DELLE ENERGIE
ALTERNATIVE
Viale Regina Margherita 125
I-00198 Roma (IT)**

(72) Inventor : **Lorenzini, Lorenzo
Via di Vigna Stelluti 157
I-00191 Roma (IT)**
Inventor : **Borello, Alberto
Via della Caffarelletta 65
I-00179 Roma (IT)**
Inventor : **Casadio, Sergio
Via degli Oleandri 11
I-00061 Anguillara Sabazia Roma (IT)**

(74) Representative : **Sarpi, Maurizio
Studio FERRARIO Via Collina, 36
I-00187 Roma (IT)**

## Description

The process which is the object of the present invention concerns the preparation of lithium aluminate spheroidal powders, through atomization and drying of aluminum and lithium colloidal solution and subsequent thermal treatment.

The oxides based on LiAlO₂ so obtained comprise the basic material for the use as tritium generator in the thermonuclear fusion reactor.

A further use of this class of compounds is provided for manufacturing inert ceramic supports for the fused carbonate electrolyte in fuel cells of advanced type.

Lithium aluminate gamma phase is employed both in nuclear fusion reactors and in combustion cells, due to its stability at high temperatures.

Presently $\gamma$-LiAlO₂ "nuclear grade" is put on the market by CERAC InC. (USA).

The synthesis procedures are usually carried out by reacting alumina powder with lithium salts.

The dry mixing of the reaction powders is carried out either in mills adapted for homogenizing the starting products or by a wet method whereby the alumina powders are suspended in lithium solutions and the obtained suspensions are subjected to "spray drying".

The conventional sol-gel method is also used for obtaining such oxides.

The aluminate particles so obtained are subsequently subjected to suitable thermal treatments for obtaining the gamma phase.

The method of dry mixing alumina powders and lithium salts shows the following drawbacks:

a) the grain size distribution is difficult to control;
b) the homogeneity is low;
c) there is a loss of product in the working steps;
d) intermediate allotropic phases in the final product are present which are unwanted;
e) low specific surface of the product;
f) the stoichiometric ratio of the product is difficult to control.

The spray-drying suspension method can show similar drawbacks.

The conventional sol-gel method (scheme 1) which has been developed in the sixties by many world research laboratories for preparing uranium-thorium and uranium-plutonium mixed oxides lends itself to preparing lithium aluminate.

However it shows the following drawbacks:

g) it requires a series of intermediate steps;
h) it is expensive and involves safety problems;
i) the obtainable grain size distribution range in the final powder is limited;
l) the process parameters for the stoichiometric control (lithium solubility in the gelation liquids ) are critical.

The French Patent 2,563,512A describes a process for making gamma lithium aluminate which comprises dissolving aluminum metal in lithium hydroxide solution, atomising the suspension thus formed and drying the particles so produced by contact with hot air (200 °C to 450°C) and thereafter calcining the product at 850°C to 1100°C to form the gamma allotrope of lithium aluminate.

This process however has the great disadvantage to use aluminum metal as starting material which is a precious and expensive material and which has the further disadvantage of developing gaseous hydrogen in the first step of the cited process, involving many safety problems.

Furthermore, the use of aluminum metal does not allow an industrial exploitation of said process.

The process which is the object of the present invention uses instead an alumina sol as a starting product.

By adding to the alumina sol a lithium nitrate solution, until a unitary molar Li/Al ratio is achieved, a conditioned sol is obtained which, after being directly subjected to atomization in a drying parallel stream (spray-drying), provides a fine grain powder which has a controllable medium cut and which, after undergoing proper thermal treatments, is comprised of stoichiometric LiAlO₂ with the desired allotropic phase.

The process of the present invention comprises the following steps:

preparing a mixture of an alumina sol and a lithium nitrate solution with a lithium/aluminum molar ratio of 1:1;

homogenising said mixture by agitation;

subjecting the homogenised mixture to atomization in a gaseous drying stream to obtain a very fine grain powder;

separating the powder from the gaseous drying stream by means of a cyclone separator;

subjecting the separated powder to thermal treatment to obtain gamma-phase lithium aluminate powder.

According to the method of the present invention, the following advantages are obtained:

m) The starting material characteristics (alumina sol) are assured by an absolute homogeneousness of the product;
n) In the effective balance of the material the product losses are negligible;
o) High specific surface;
p) Well defined stoichiometric ratio of the product due to the fact that the gelation is caused through hot air drying and not through extraction by substances which could solubilize any lithium whereby the stoichiometric ratios are altered as at point l.
q) Wide and controllable grain size distribution
r) Lower number of process steps and lack of additional substances with a remarkable advantage for the product quality.

For instance LiAlO$_2$ is obtained with high specific surface which can attain 30 m$^2$/g subsequent to a thermal treatment of the product at 600 °C for 22 hours.

It is obvious that as a consequence of the calcination times the specific surface can be varied.

This invention will become clearer from the following description and from the attached drawings which illustrate a preferred embodiment as a non limitative example thereof.

In the drawings:

Fig.1 is a schematic illustration of the apparatus;

Fig.2 shows some particulars of the apparatus of fig.1;

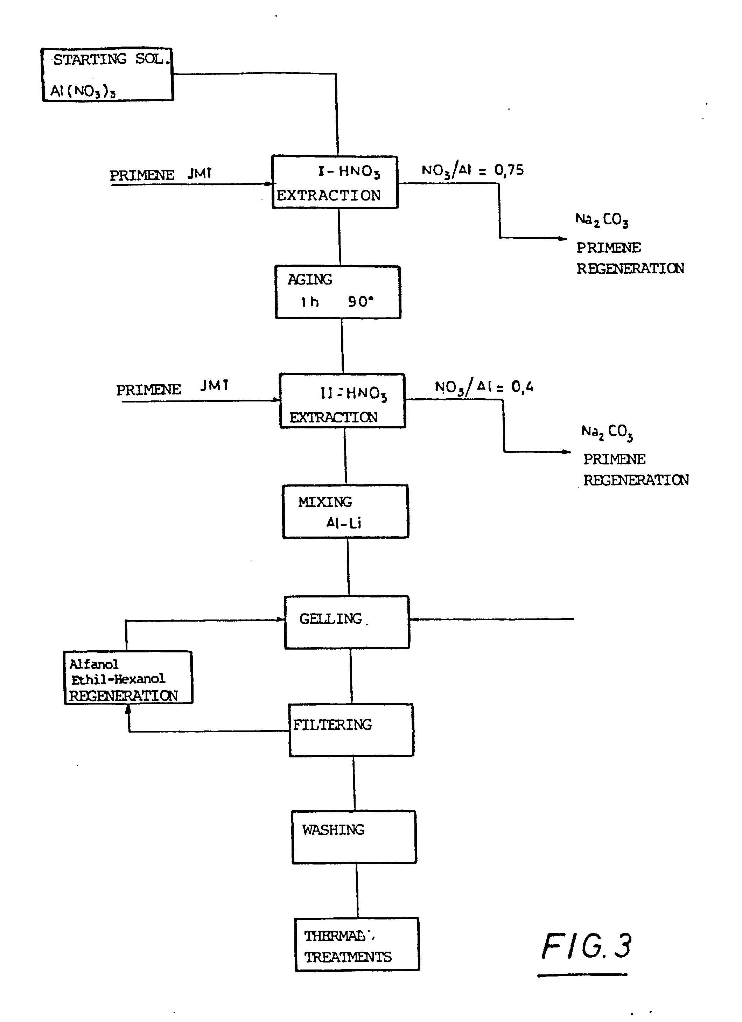

Fig.3 is a block scheme (scheme 1) of the conventional sol-gel method;

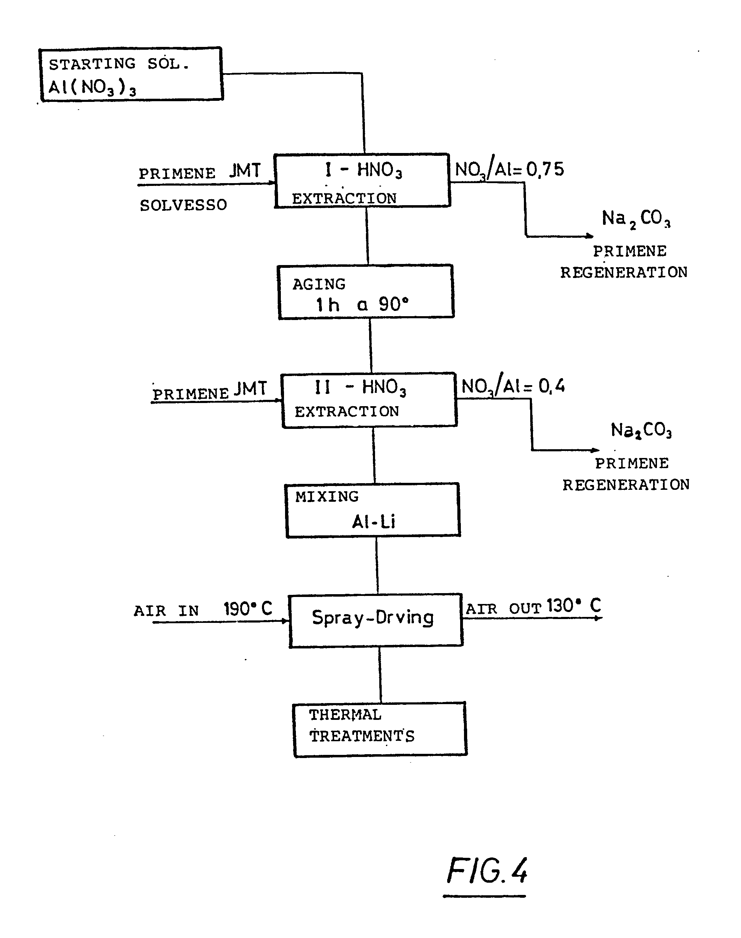

Fig.4 is a block scheme (scheme 2) for preparing LiAlO$_2$ by the conventional spray-drying method;

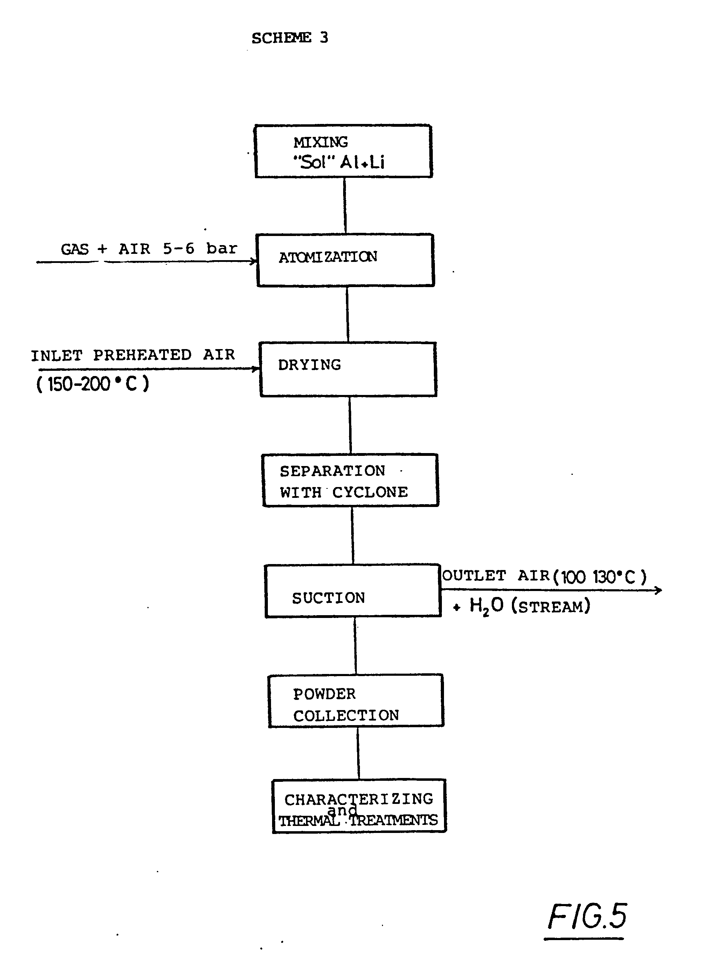

Fig.5 is a flow sheet (scheme 3) for obtaining precursors for LiAlO$_2$ synthesis according to the present invention.

With reference to the figures, the required operations for realizing the process are as follows: (see block scheme 3):

Sol mixing;

Atomization by air at the pressure of 5-6 bar;

Drying by preheated air at 150-200 °C;

Separation of the product from the drying fluid in a cyclone separator;

Suction of the preheated air and collection of the powder in a vessel for sending it to the analysis and to the thermal treatments.

The feeding solution as prepared in a mixing vessel is sent by means of a pump to an atomizer nozzle having a diameter of 0,4-0,7 mm and which has a fitting for pressurized air or inert gas.

The atomization of the solution at contact with pressurized air and the subsequent drying of the produced particles occurs in a very short time inside the drying chamber.

The very homogeneous powder particles are beaten down in a cyclone separator provided with collecting vessel.

The preheated air is expelled to the outside of the exhauster together with the starting H$_2$O solution in the form of vapour, passing through a filter by which small powder traces present in the drying fluid are retained.

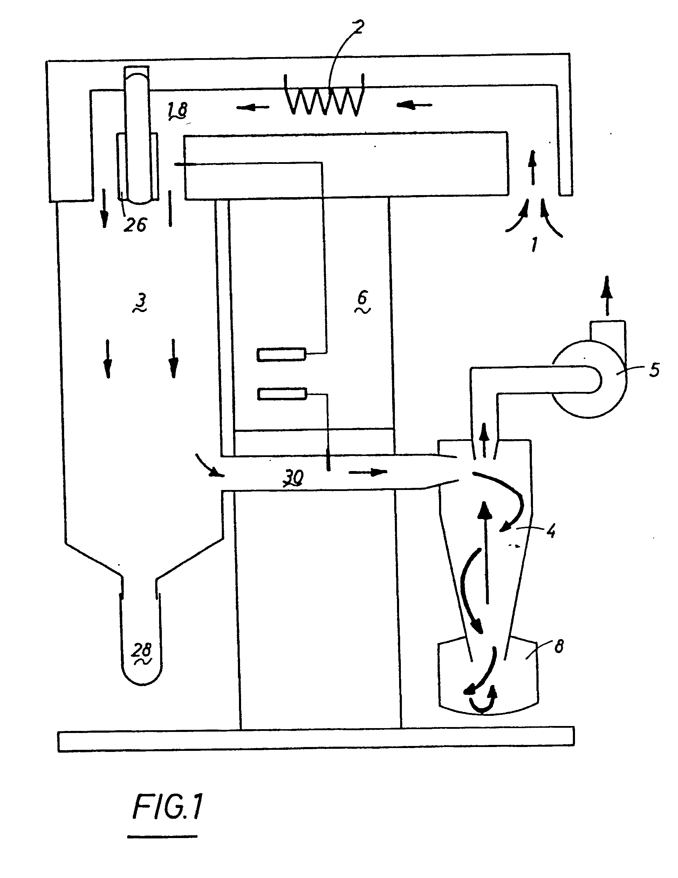

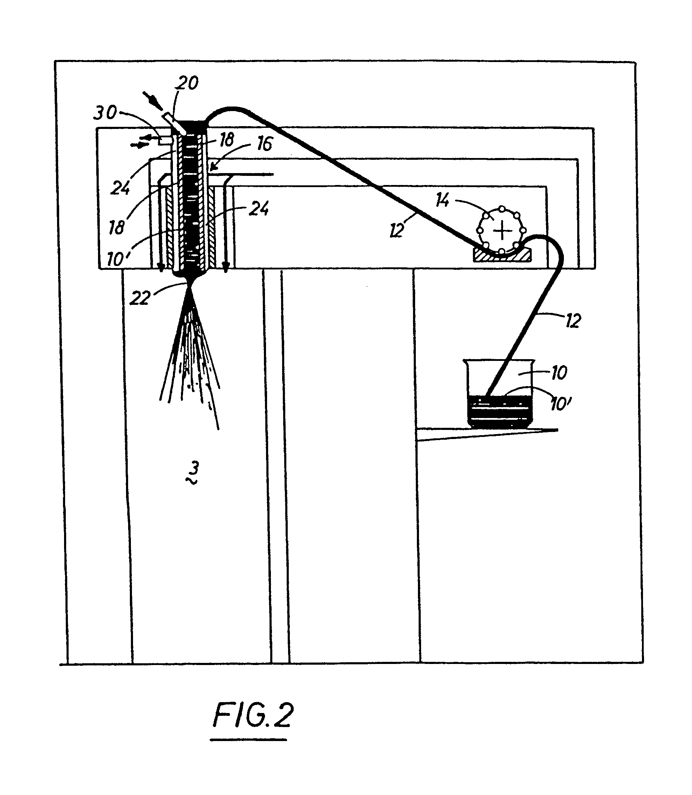

With reference to the figures 1 and 2, the apparatus as used in the present invention comprises a vessel 10 whereinto an alumina sol is introduced together with a lithium nitrate solution.From the bottom of said vessel a flexible pipe 12 draws off the solution, the pipe 12 being connected to the suction side of a peristaltic pump 14 with a flow rate of 150-200 cc/h.Pump 14 pushes the homogeneous aluminum and lithium nitrate through pipe 12 and atomizer 16.The atomizer comprises a vertical elongated hollow cylindrical body 18 which becomes filled with said solution 10' by means of 12 and valve, not shown. At the inside of said cylinder 18,and,specifically at the top thereof an air or inert gas flow is added through an inlet 20 at the pressure of 5 bar with a flow rate of 200-600 normal l/h. At the bottom of the cylinder 18 an atomizer nozzle 22 is provided of which the diameter specifically is 0,4 mm and produces a parallel jet which is dried within chamber 3 underlying said atomizer.The hollow cylinder 18 is surrounded by a space 24 into which a fluid is fed and circulated with an inlet and an outlet 30 at the temperature as required for obtaining the required atomization of said solution

Cylindrical body 18 together with space 24 is held by a cylinder 26 the periphery of which is flushed by a flow of heated air or inert gas which is heated to about 150-200 °C by a resistor 2 which is located in said flow. The air or inert gas flow enters the apparatus through inlet 1.

At the outlet from nozzle 22 the alumina and lithium sol is atomized and dried by said air flow,whereby it becomes pulverized.

From chamber 3,at the bottom of which a collector 28 for humidity and fragments of excessive weight is located, said powder mixed with air enters the cyclone separator 4 through channel 30.At the bottom of cyclone 4 a powder collecting vessel 8 is provided which powder is sent to analysis and to the thermal treatments.At the top of cyclone 4 the preheated air is drawn by means of exhauster 5.In order to continuously detect the entrance and outlet temperatures of the air or of other preheating fluid two thermal probes 6 and 7 are provided which are located at the entrance and at the outlet of said air into and out of chamber 3.

As an example a process as above is described.

A solution is prepared in a vessel 10 by adding to an Al$_2$O$_3$ (Al 3.1 M) sol, a solution of LiNO$_3$ of the same concentration in a volume ratio 1.1 and leaving same to homogenize for 15 minutes at 40 °C while agitating within vessel 10 .(See fig.2).

By means of a peristaltic pump 14 the solution is sent to nozzle 22 which has a diameter of 0.4 mm and there atomized by an air flow which can be adjusted from 200 to 600 Nl/h at a pressure of 5 bar.

The atomized solution is dried within the drying chamber 3 by preheated air at the entrance temperature of 190 °C.The temperature at the out of chamber 3 and the temperature at the entrance into the cyclone separator 4 is 130 °C.

The vacuum formed by vacuum pump 5 is in the range from 20 to 30 mbar which is sufficient for the total beating down of the solid particles.

The product so obtained shows a good uniformity of granulation around a micrometre and a very good flow characteristics.

The powder is sent to analysis and to the thermal treatments for calcinings and sintering.

This process,by the use of a simply operable apparatus available in the trade appears to be advantageous as stated at point p) above. It is consequently unexpensive and yields good purity and quality results.

## Claims

1. A process for preparing lithium aluminate powder in the gamma phase which comprises the following steps:

preparing a mixture of an alumina sol and a lithium nitrate solution with a lithium /aluminum molar ratio of 1:1;

homogenising said mixture by agitation;

subjecting the homogenised mixture to atomization in a gaseous drying stream to obtain a very fine grain powder;

separating the powder from the gaseous drying stream by means of a cyclone separator;

subjecting the separated powder to thermal treatment to obtain gamma-phase lithium aluminate powder.

2. A process as claimed in claim 1 wherein said atomization is carried out by means of air at the pressure of 5-6 bar and the drying is carried out by means of preheated air at 150-200 °C.

3. A process as claimed in claim 1 wherein the separation of said powder from said drying fluid stream occurs in a cyclone separator at the bottom of which the powder is collected while the fluid of said drying gaseous stream is drawn by means of an exhauster.

4. A process as claimed in claim 1 wherein the addition of alumina sol to a lithium nitrate solution occurs in a vessel from which the aluminum and lithium colloidal solution is transferred from said vessel to an atomizer through a peristaltic pump.

5. A process as claimed in claims 1 and 3 wherein said thermal treatment will last 22 hours at a temperature of 600 °C and the product so obtained is comprised of LiAlO$_2$ with a specific surface of 30 m$^2$/g.

6. A process as claimed in claim 1 wherein the solution is atomized through a nozzle of 0.4-0.7 mm under a pressure of 5 bar with a flow in the range from 200 to 600 Nl/h.

7. A process as claimed in claim 1 wherein the homogenization of said mixture lasts for 15 minutes at a temperature of 40 °C.

8. A process as claimed in claim 1 wherein the inlet temperature in said cyclone separator is 130 °C.

9. A process as claimed in claim 1 wherein the suction generated by said cyclone separator is in the range of 20-30 bar.

10. A process as claimed in claim 1 wherein the atomizer ,during its operation,is heated by means of a fluid which circulates within a space which embraces the body of the atomizer .

## Patentansprüche

1. Verfahren zur Herstellung von Lithiumaliminatpulver in der Gammaphase, bestehend aus den folgenden Verfahrensschritten:

Herstellen einer Mischung aus einem Aluminiumoxidsol und einer Lithiumnitratlösung mit einem Molverhältnis von Lithium/Aluminium von 1:1;

Homogenisieren des Gemischs durch Rühren;

die homogenisierte Mischung wird einer Zerstäubung in einem gasförmigen Trocknungsstrom unterworfen, um ein sehr feines Kornpulver zu erhalten;

das Pulver wird vom dem gasförmigen Trocknungsstroms mittels eines Zyklonenabscheiders separiert; und

das separierte Pulver wird einer thermischen Behandlung unterzogen, um Gammaphasen-Lithiumaluminatpulver zu erhalten.

2. Verfahren nach Anspruch 1, dadurch gekennzeichnet, daß das Zerstäuben mittels Luft bei einem Druck von 5-6 bar durchgeführt wird, und daß das Trocknen mittels vorgeheizter Luft bei 150-200 °C vorgenommen wird.

3. Verfahran nach Anspruch 1, dadurch gekennzeichnet, daß die Abscheidung des Pulvers aus dem Trocknungsfluidstrom in einem Zyklonenabscheider auftritt, an dessen Boden das Pulver gesammelt wird, während das Fluid des gasförmigen Trocknungsstroms mittels eines Luftabsaugers abgezogen wird.

4. Verfahren nach Anspruch 1, daduch gekennzeichnet, daß die Zugabe von Aluminiumoxidsol zu einer Lithiumnitratlösung in einem Behälter erfolgt, aus dem die kolloidale Aluminiums- und Lithiumlösung über eine peristaltische Pumpe zu einem Zerstäuber transportiert wird.

5. Verfahren nach Anspruch 1 und 3, dadurch gekennzeichnet, daß die thermische Behandlung bei einer Temperatur von 600°C 22 Stunden dauert und das derart erhaltene Erzeugnis aus LiAlO$_2$ mit einer spezifischen Oberfläche von 30 m$^2$/g besteht.

6. Verfahren nach Anspruch 1, dadurch gekennzeichnet, daß die Lösung durch eine 0,4-0,7 mm-Düse unter einem Druck von 5 bar mit einem Durchsatz in dem Bereich von 200-600 Nl/h atomisiert wird.

7. Verfahren nach Anspruch 1, dadurch gekennzeichnet, daß das Homogenisieren des Gemisch 15 Minuten bei einer Temperatur von 40°C dauert.

8. Verfahren nach Anspruch 1, dadurch gekennzeichnet, daß die Einlaßtemperatur in den Zyklonenabscheider 130°C beträgt.

9. Verfahren nach Anspruch 1, dadurch gekennzeichnet, daß der von dem Zyklonenabscheider erzeugte Saugdruck in dem Bereich von 20-30 bar liegt.

10. Verfahren nach Anspruch 1, dadurch gekennzeichnet, daß der Zerstäuber während seines Betriebs mittels eines Fluids erhitzt wird, welches innerhalb eines Raums zirkuliert, der den Köper des Zerstäuber umgibt.

**Revendications**

1. Un procédé de préparation de poudre d'aluminate de lithium sous forme gamma qui comprend les opérations suivantes :

préparer un mélange d'un sol d'alumine et d'une solution de nitrate de lithium présentant un rapport molaire lithium/aluminium de 1:1 ;

homogeneiser ledit mélange par agitation ;

soumettre le mélange homogénéisé à une atomisation dans un courant de séchage gazeux afin d'obtenir une poudre à grains très fins ;

séparer la poudre du courant de séchage gazeux au moyen d'un séparateur à cyclone ;

soumettre la poudre ainsi séparée à un traitement thermique pour obtenir une poudre d'aluminate de lithium sous forme gamma.

2. Un procédé comme revendiqué à la revendication 1, dans lequel ladite atomisation est effectuée au moyen d'air à la pression de 5-6 bars et le séchage est effectué au moyen d'air préchauffé à 150-200°C.

3. Un procédé comme revendiqué à la revendication 1, dans lequel la séparation de ladite poudre et dudit courant de fluide de séchage se produit dans un séparateur à cyclone au fond duquel la poudre est recueillie alors que le fluide dudit courant gazeux de séchage est retiré au moyen d'un dispositif d'évacuation

4. Un procédé comme revendiqué à la revendication 1, dans lequel l'addition de sol d'alumine à une solution de nitrate de lithium se produit dans un récipient dont la solution colloïdale d'aluminium et de lithium est transférée dudit récipient vers un atomiseur par l'intermédiaire d'une pompe péristaltique.

5. Un procédé comme revendiqué aux revendications 1 et 3, dans lequel ledit traitement thermique durera 22 heures à une température de 600°C et le produit ainsi obtenu est composé de $LiAlO_2$ présentant une surface spécifique de $30m^2/g$.

6. Un procédé comme revendiqué à la revendication 1, dans lequel la solution est atomisée à travers une buse de 0,4-0,7 mm sous une pression de 5 bars avec un débit de l'ordre de 200 à 600 Nl/h.

7. Un procédé comme revendiqué à la revendication 1, dans lequel l'homogénéisation dudit mélange dure 15 mn à une température de 40°C.

8. Un procédé comme revendiqué à la revendication 1, dans lequel la température d'entrée dans ledit séparateur à cyclone est de 130°C.

9. Un procédé comme revendiqué à la revendication 1, dans lequel l'aspiration créée par ledit séparateur à cyclone est de l'ordre de 20-30 bars.

10. Un procédé comme revendiqué à la revendication 1, dans lequel l'atomiseur, pendant son fonctionnement, est chauffé au moyen d'un fluide qui circule à l'intérieur d'un espace qui renferme le corps de l'atomiseur.

*FIG.1*

FIG.2

FIG. 3

```
┌─────────────────────┐
│  STARTING SOL.      │
│  Al(NO₃)₃           │
└─────────────────────┘

                    ┌──────────────────┐
  PRIMENE  JMT      │  I - HNO₃        │  NO₃/Al= 0,75
  ─────────────────▶│  EXTRACTION      │──────────┐
  SOLVESSO          └──────────────────┘          │       Na₂CO₃
                                                   └────▶  PRIMENE
                                                           REGENERATION

                    ┌──────────────────┐
                    │  AGING           │
                    │  1h  a 90°       │
                    └──────────────────┘

                    ┌──────────────────┐
  PRIMENE JMT       │  II - HNO₃       │  NO₃/Al = 0,4
  ─────────────────▶│  EXTRACTION      │──────────┐
                    └──────────────────┘          │       Na₂CO₃
                                                   └────▶  PRIMENE
                                                           REGENERATION

                    ┌──────────────────┐
                    │  MIXING          │
                    │  Al-Li           │
                    └──────────────────┘

  AIR IN   190° C   ┌──────────────────┐  AIR OUT 130° C
  ─────────────────▶│  Spray-Drying    │───────────────▶
                    └──────────────────┘

                    ┌──────────────────┐
                    │  THERMAL         │
                    │  TREATMENTS      │
                    └──────────────────┘
```

$$FIG.4$$

SCHEME 3

```
                        ┌──────────────────┐
                        │     MIXING       │
                        │   "Sol" Al+Li    │
                        └────────┬─────────┘
                                 │
                        ┌────────┴─────────┐
GAS + AIR 5-6 bar ─────▶│   ATOMIZATION    │
                        └────────┬─────────┘
                                 │
INLET PREHEATED AIR     ┌────────┴─────────┐
──────────────────────▶│     DRYING       │
( 150-200 °C )          └────────┬─────────┘
                                 │
                        ┌────────┴─────────┐
                        │   SEPARATION     │
                        │  WITH CYCLONE    │
                        └────────┬─────────┘
                                 │
                        ┌────────┴─────────┐   OUTLET AIR(100 130°C)
                        │    SUCTION       │──────────────────────────▶
                        └────────┬─────────┘   + H₂O (STREAM)
                                 │
                        ┌────────┴─────────┐
                        │    POWDER        │
                        │  COLLECTION      │
                        └────────┬─────────┘
                                 │
                        ┌────────┴─────────┐
                        │ CHARACTERIZING   │
                        │      and         │
                        │THERMAL TREATMENTS│
                        └──────────────────┘
```

OUTLET AIR$(100\ 130°C)$ + $H_2O$ (STREAM)

FIG.5